# EUROPEAN PATENT APPLICATION

(11) **EP 4 574 651 A1**
(43) Date of publication of application: **25.06.2025**
(21) Application number: 23219239.3
(22) Date of filing: 21.12.2023
(51) Int. Cl.: B64C 3/24, B64U 20/70, B64U 20/75, B32B 27/00, B64U 20/40

(54) **AIRFRAME PART OF AN AIRFRAME OF AN UNMANNED AERIAL VEHICLE AND METHOD FOR MANUFACTURING SAME**

(71) Applicant: Wingtra AG, 8045 Zürich (CH)
(72) Inventor: JUNG, Constantin, 8004 Zürich (CH)
(74) Representative: Kohler Schmid Möbus Patentanwälte

(57) **Abstract**

The invention relates to an airframe part (14) for an airframe (12) for an unmanned aerial vehicle (UAV), in particular a tail-sitting fixed-wing vertical takeoff and landing UAV (10). The airframe part has an expanded polystyrene (EPS) liner (32) and a polycarbonate (PC) shell (34). The shell is arranged on the outer side of the airframe part. The outer face of the liner is mainly, in particular completely covered by the shell. Adhesive bonding is established between the shell and the liner over essentially their entire contact area. The same mold can be used for forming the liner and for bonding the liner and the shell.

## Description

### Field of invention

The invention relates to an airframe part for an unmanned aerial vehicle and a method for manufacturing the airframe part. The invention further relates to an airframe comprising the airframe part and an unmanned aerial vehicle comprising the airframe.

### Background of the invention

Various types of unmanned aerial vehicles (UAV) or drones are generally known. The abbreviation UAV and the terms "unmanned aerial vehicle" or "drone" are understood to be synonyms.

In general, fixed wing drones and rotary wing drones, often referred to as multicopters, are distinguished. The invention primarily relates to fixed wing drones, in particular tail sitting vertical takeoff and landing (VTOL) drones.

The airframe of an UAV is understood to be the mechanical structure of the UAV, and may include in particular, and if present, a fuselage, wings, winglets, a tail and a nose.

Air frames of rotary wing drones or multicopters typically include slim struts and are usually made as injection molded plastic parts or as carbon fiber parts.

In contrast, airframes of fixed wing drones often have an extended surface, which forms for instance wings, a fuselage or a blended wing-body.

For manufacturing of fixed wing airframes, composites may be used. While fiber reinforced composites may be strong and light, they have several drawbacks such as expensive manual production, wherein the quality depends on the level of the workers, which often results in high scrap rates. For this reason, composite manufacturing is poorly scalable to large quantities. Additionally, fiber reinforced composites may be prone to cracking due to thin sandwich structures and they are sensitive to UV-radiation and moisture. Further, it is difficult to integrate interfaces to hold components.

It is also known to use foam made from expanded polypropylene (EPP) and/or expanded polyolefin (EPO), which may partially be covered with flexible decal films but often is used without surface protection. While EPP/EPO foam is reasonably impact resistant, it has limited rigidity and limited durability in particular if exposed to heat or rough environments. Further, EPP/EPO foam often does not keep its shape well.

For manufacturing of cycling helmets, it is known to arrange both a shell and a bulk of polystyrene beads inside a mold cavity. Then, hot steam is directed into the mold cavity and passes through the bulk of polystyrene beads. Upon heating, the polystyrene beads expand and fuse to each other and bond to the shell in the same molding step. Since cycling helmets are designed with several ribs, which are separated by large openings, the steam has the possibility to pass through the bulk of beads while the shell is present in the mold. This manufacturing method is referred to as inmolding.

### Object of the invention

It is an object of the present invention to provide a strong and lightweight airframe part, which allows for efficient and preferably mostly automated manufacturing.

### Summary of the invention

According to the invention, an airframe part for an airframe for an unmanned aerial vehicle is provided. The airframe part is preferably adapted for a fixed wing UAV, in particular a tail sitting vertical takeoff and landing UAV.

The airframe part comprises a liner made from expanded polystyrene (EPS) and a shell made from polycarbonate (PC). In other words, the liner and the shell consist of EPS or PC, respectively.

Note, that a number of parts of other materials such as inserts or electrical or mechanical components may be embedded in the liner. In this case, the liner is the EPS foam body excluding the embedded parts. The liner is preferably monolithic. The liner may be massive, i.e. a solid body, or hollow, i.e. include a cavity.

The shell generally does not comprise any embedded parts. The shell may be monolithic, i.e. comprise exactly one shell part, or comprise a plurality of shell parts. A protective film of suitable material other than PC may be provided on the side of the shell facing away from the liner. In this case, the shell is the PC substrate onto which the protective film is adhered.

The shell covers at least 70 % of an exposed surface of the airframe part. Preferably, the shell covers at least 90 % of the exposed surface of the liner. Particularly preferably, the shell covers at least 95 % of the exposed surface of the liner. The exposed surface is an outer surface of the airframe in an assembled state.

The shell is bonded to the liner over at least 90 %, preferably at least 95 %, particularly preferably at least 98 %, of the extension of the shell. In other words, a bond between the shell and the liner extends essentially over the entire contact area of the shell and the liner. Inevitable manufacturing tolerances or requirements of the manufacturing process may reduce the bonded area to be slightly smaller than the extension of the shell. For the description of the present invention, the bond is considered to extend over the entire extension of the shell, in other words to be a full surface bond, if the bonded area is at least 90 %, preferably at least 95 %, particularly preferably at least 98 %, of the extension of the shell. The bonding between the shell and the liner may be adhesive and/or cohesive. The extension of the shell typically corresponds to the contact area between the shell and the liner.

The shell is a thin sheet conforming to the external shape of the liner over the shell's entire extension. Generally, not even a local gap is formed between the shell and the liner. Thus, a contact area between shell and liner, in which contact area the bond is established, is equal to the extension of the shell. Local depressions in the surface of the liner facing the shell, where no bonding might be established, may be present, if the area of these depressions does not reduce the bonded area below the above-mentioned limit.

The shell is typically thermoformed from a flat sheet prior to bonding it to the liner. The shell is preferably transparent and colorless, in particular clear.

The wide area of contact between shell and liner improves many structural properties, in particular with respect to components made from either polycarbonate or EPS alone and with respect to airframe constructions known from the state of the art. In particular, the airframe part according to the invention provides high bending strength, high torsional strength, high impact resistance, and high resistance against abrasion. Bonding over the large area of contact between the shell and the liner enhances these structural advantages. Further, the shell, which covers most of the exposed surface, preferably the entire exposed surface, provides surface protection to the liner, allows for colorization and application of durable decals. In particular, the polycarbonate surface of the shell may provide a glossy or shiny surface, facilitates cleaning and provides UV protection to the liner. Additionally, the PC shell improves temperature resistance of the airframe part.

The EPS liner, whose exposed surface is protected by the shell, provides good shock absorption properties to the airframe part. Further, EPS has low water absorption, which is fortified by covering the exposed surface with the liner. Additionally, mechanical properties of the airframe part are stable with respect to aging, due to the EPS liner with PC shell surface protection.

The liner may be designed with ribs and/or spars on an internal surface, i.e. a surface that is not exposed in the assembled state of the airframe. Ribs and spars provide additional structural strengthening.

The airframe part may be efficiently manufactured using a manufacturing method according to the invention, as described below. In particular, the inventive construction with a surface molded PC shell on an EPS liner allows for mostly automated production, which provides consistent manufacturing quality, and reduces manual labor as compared to e.g. mostly manual composite manufacturing. Therefore, it is also facilitated to vary production rates and quantities. Likewise, time to market may be reduced and less training of workers is required. Additionally, material and production cost are relatively low, e.g. as compared to fiber reinforced composites.

The shell of one airframe part may comprise exactly one monolithic shell part made from polycarbonate. This design is particularly applicable for airframe parts whose exposed surface faces primarily in one direction.

Alternatively, the shell may comprise at least two, preferably exactly two, separate shell parts, each shell part being made from polycarbonate. This design is particularly applicable for airframe parts whose exposed surface faces in different directions, in particular in opposed directions. The two shell parts can easily be attached to the surface of the liner from opposing directions, which may be difficult with one single shell part. Note, that separate shell parts might also be arranged on the same side of the liner. If several shell parts are provided, generally a full surface bond is established between each shell part and the liner, i.e. the bond extends over at least 90 % of the extension of each shell part.

The shell may have a maximum thickness of at most 0.5 mm, preferably at most 0.4 mm. A thin shell saves weight, which is essential for flight characteristics of the UAV with the airframe part. Use of such thin shells is enabled by the extensive bonding area between shell and liner.

The shell may have a varying thickness within one shell part. Different shell parts may have different maximum thicknesses.

A minimum thickness of the shell may be at least 0.1 mm.

A minimum thickness of the liner may be at most 7 mm, preferably at most 5 mm. The stabilization provided by the shell allows use of such thin EPS parts in an airframe part.

The liner may have a density of at most 120 g/l, preferably at most 75 g/l, particularly preferably at most 60 g/l. Low density of the liner saves weight, which is essential for flight characteristics of the UAV with the airframe part. The reduced mechanical strength of low density EPS is compensated by surface bonding of the shell to the liner. The airframe part with bonded (thin) shell and (low density) liner has superior mechanical properties as compared to parts of expanded polypropylene (EPP) or of higher density EPS without shell.

Typically, the liner has a uniform density. Different liners of different airframe parts for one airframe may have different densities.

An extension of the shell may be at least 150 cm², preferably at least 400 cm², particularly preferably at least 0.1 m². The advantages of the shell and the bonded shell-liner-assembly are enhanced with larger shells or airframe parts. Likewise, with large airframe parts, it is hard to achieve appropriate structural strength with conventional designs at reasonable effort.

An insert may be received inside the liner, preferably inmolded into the liner. The insert allows attachment of components such as sensors, controllers, a battery, or actuators. The insert can readily be placed inside the mold prior to molding the EPS liner. This allows for integration of the insert at basically negligible extra expense. Furthermore, a secure form fit between insert and liner is obtained. The insert may be coated with a primer, in particular a thermally activated adhesive. An additional adhesive connection between insert and liner can be obtained using primer. The insert may, for instance, be made from polyamide (PA), acrylonitrile butadiene styrene (ABS), polycarbonate (PC), or from a fiber composite. In contrast to the simple integration of the insert in the airframe part according to the invention, with conventional fiber reinforced composites tedious preparation of surfaces is required in order to glue components or holders for these components onto the airframe part.

A cable guide and/or a receptacle for an electric component may be formed within the liner. The electric component may be a printed circuit board. Structures such as cable guides or receptacles can be provided in the liner by using appropriate protrusions or sliders in the mold for the liner at low expense. After molding of the liner, these structures are ready to use without the need for post-processing. In contrast, with conventional fiber reinforced composites, cable guides or holders for electric components require tedious surface preparation and gluing.

Preferably, a primer layer is disposed between the shell and the liner. The primer is in particular a thermally activated adhesive. The primer enhances bonding strength between shell and liner.

A color layer may be disposed between the shell and the liner. Since the (transparent) shell covers the color layer, the color layer is protected against abrasion. Additionally or alternatively, decals may be disposed between the shell and the liner, in particular between the shell and the color layer. This allows for efficient manufacturing by applying the decals to the shell, if required, and painting in particular printing, the color layer onto the shell prior to bonding the shell to the liner.

In particular, the color layer is disposed between the shell and the primer layer. For application of the primer layer, the shell may be coated with the primer after application of the color layer. Preferably, the primer layer is printed onto the color layer. Alternatively, paint and primer may from a common layer of paint and primer.

### Airframe according to the invention

The invention also relates to an airframe for an unmanned aerial vehicle. The airframe comprises at least one airframe part according to the invention, as described above. Preferably, the airframe comprises several airframe parts according to the invention, as described above.

The liner of a first airframe part according to the invention may be fixed, preferably glued, to the liner of a second airframe part according to the invention. In other words, the liners are directly fixed to each other. This facilitates manufacturing while enhancing strength of the airframe. A reinforcement such as a tongue, e.g. from fiber reinforced composite, which is embedded in one of the liners may protrude into a groove of the other liner. Further enhanced strength can be obtained in this way.

The liners of the two airframe parts may enclose at least one cavity. In other words, the cavity is delimited by both liners, which are fixed to each other. With this design, large cavities may be obtained inside a strong airframe. Components such as motors, controllers, sensors or a battery of the UAV may be received inside the cavity or one of the cavities. Separate cavities may be provided for different components. By integrating the at least one cavity in the liners of two adjacent airframe parts, the liners provide holding structures for the components to be received inside the cavity. Inserts for fixing the component to the airframe may be provided in wall areas of the liner adjacent to the cavity.

### Unmanned aerial vehicle according to the invention

The invention further relates to an unmanned aerial vehicle, in particular a fixed wing unmanned aerial vehicle. The unmanned aerial vehicle (UAV) is preferably a vertical takeoff and landing (VTOL) UAV, particularly preferably a tail sitting VTOL UAV.

The UAV comprises an airframe according to the invention, as described above. Further, the UAV comprises a propulsion system and a control system.

The control system preferably comprises an attitude control sensor and a controller. The control system is designed to use data from the attitude control sensor to control the attitude of the unmanned aerial vehicle and the propulsion system. The controller may include autonomous flight control functions.

The propulsion system typically comprises a propeller, a motor and a battery.

The unmanned aerial vehicle preferably further comprises a measurement sensor system, in particular comprising a camera, for receiving non-flight related data. Data from the measurement sensor system is generally not provided to the control system. The control system is designed to operate independent from measurements of the measurement sensor system. However, the control system may be designed to trigger the measurement sensor system to perform measurements, for instance dependent from a position of the unmanned aerial vehicle. Obviously, the measurements of the measurement sensor system are related to a position and/or attitude of the UAV. However, data measured by the measurement sensor system is typically evaluated only after completion of a flight mission of the UAV. The measurement sensor system may comprise a memory device for measurement data.

### Manufacturing method according to the invention

Finally, the invention relates to a method for manufacturing an airframe part comprising a liner made from expanded polystyrene (EPS) and a shell having at least one shell part made from polycarbonate (PC), wherein the shell covers at least 70 % of an exposed surface of the airframe part. The method comprises:
A) Thermoforming the at least one shell part of the shell from a polycarbonate sheet;
B) Molding the liner by heating, preferably by steam heating, polystyrene beads inside a mold cavity of a first mold;
C) Arranging the at least one shell part of the shell and the liner inside a mold cavity of a second mold;
D) Bonding the at least one shell part of the shell to the liner over at least 90 %, preferably at least 95 %, particularly preferably at least 98 %, of the extension of the at least one shell part by heating, preferably by steam heating, the at least one shell part and the liner.

This manufacturing method results in an airframe part according to the invention, as described above.

Steps A) and B) may be performed consecutively in any order or simultaneously. Steps C) and D) are performed after steps A) and B). Step D) is performed after step C), while the at least one shell part and the liner are enclosed in the second mold.

In step A), a preferably flat polycarbonate sheet is made to conform to the shape of an exposed surface of the liner, which is to be manufactured in step B). Thereto, the polycarbonate sheet may be heated and pressed against a positive or negative mold. A vacuum may be employed to suck the softened polycarbonate sheet into the negative mold or over the positive mold. After thermoforming and cooling, a milling process may be employed to trim edges of the shell part.

The shell may comprise exactly one shell part or several, in particular exactly two, shell parts. If the shell comprises several shell parts, each shell part is typically thermoformed form a separate polycarbonate sheet.

The first mold may comprise bead injectors to insert the polystyrene beads into its mold cavity. The polystyrene beads may be pre-expanded prior to step B).

The first and second mold typically comprise two mold parts, which may be opened and closed. In the closed state, the mold parts enclose the mold cavity. Typically, both mold parts of one mold are provided with steam nozzles for inserting and/or discharging steam into or out of the mold cavity. At least one of the mold parts may be provided with a bead injector for injecting polystyrene beads into the mold cavity.

Upon heating in step B), in particular when hot steam passes through the bulk of polystyrene beads, the beads expand and fuse together. Thereby, the liner is obtained. After cooling, the liner may be removed from the first mold.

In step C), the liner and the shell part(s) may subsequently be arranged at one of the mold parts of the second mold. Pins in the mold may hold the shell and/or the liner in place. Alternatively, the liner and the shell part(s) may be provisionally attached to each other, for instance by locally applying dual sided adhesive tape.

The dual sided tape preferably covers less than 5 %, particularly preferably less than 2 % of the extension of a shell part.

Upon heating in step D), the EPS liner tends to further expand which enhances bonding to the shell part(s) and contributes to establish bonding over the entire extension of the shell part(s). In step D), typically a primer, in particular a thermally activated adhesive, is present between the shell and the liner. The primer further enhances bonding strength between shell and liner.

For steam heating in steps B) and/or D), the steam is generally directed through the mold parts towards the mold cavity. Alternatively or additionally to steam heating, inductive heating of the mold may be applied.

This method allows for efficient manufacturing of strong and lightweight airframe parts. In particular, the method also allows for mostly automated production of airframe parts with a surface molded PC shell on an EPS liner. Thereby, consistent manufacturing quality is obtained and manual labor is reduced as compared to e.g. mostly manual manufacturing of fiber reinforced composites. The method also facilitates to vary production rates and quantities. Likewise, time to market may be reduced and less training of workers is required. Additionally, material and production cost are relatively low, e.g. as compared to fiber reinforced composites.

Preferably, the geometry of the mold cavity of the first mold is identical to the geometry of the mold cavity of the second mold. Since the shell is present in the mold cavity additional to the liner in step D), a slight compression is automatically obtained when the mold is closed. The compression enhances bonding strength between shell and liner.

Particularly preferably, the first mold is identical in construction to the second mold. In Particular, one same mold may be used as the first mold and as the second mold; i.e. only one mold is required to mold the liner and to bond the liner and the shell. This reduces design and manufacturing effort for the molds. Note that the liner may temporarily be removed from the mold between step B) and step C).

Alternatively, the geometry of the mold cavity of the first mold may be different from the geometry of the mold cavity of the second mold. Generally, the mold cavities of the first and second molds are similar to one another. Their dimensions preferably differ by at most 5 % in any direction. In particular, the mold cavity of the second mold may have a different width in opening and closing direction of the second mold as compared to the width of the mold cavity of the first mold.

The mold cavity of the second mold may be wider than the mold cavity of the first mold. This avoids excessive compression of the liner and the shell. This variant may be particularly useful with thin liners covered by shell parts on opposing faces.

Preferably, the mold cavity of the second mold is narrower than the mold cavity of the first mold. This increases compression of shell and liner and may enhance bonding strength. This variant may be particularly useful for thicker liners, which may comprise ribs and/or spars on an internal surface.

A color layer and/or a primer layer may be printed onto the polycarbonate sheet prior to step A), in particular on the side of the polycarbonate sheet, which faces the liner in steps C) and D). Preferably, the color layer is printed first and then the primer layer is printed onto the polycarbonate sheet. The primer may be thermally activated adhesive. Applying the color layer and/or the primer layer to the flat polycarbonate sheet may enhance manufacturing efficiency and coating quality. In particular, printing techniques may be employed with the flat polycarbonate sheet, whereas application of the color layer and/or primer layer to the three-dimensionally shaped shell part or to the liner might require expensive and fault-prone spraying or painting techniques.

The side of the polycarbonate sheet facing away from the liner may be covered by a protective film during all manufacturing steps.

Prior to step B), the polystyrene beads may be injected into the mold cavity of the first mold while the first mold is partially open. A curtain or the like may prevent leakage of the polystyrene beads from the partially open mold cavity. With the wider mold cavity in the partially open state of the mold, it is facilitated to obtain a uniform filling of the mold cavity, especially in regions where the liner is very thin or in corners. Generally, the first mold is completely closed before the liner is molded in step B).

Further features and advantages of the invention can be derived from the description and the drawings. The above-mentioned features and the features described below can be used according to the invention individually or in any useful combination. The embodiments shown and described are not to be understood as a conclusive list, but rather have an exemplary character for the description of the invention.

### Brief description of the drawings

- Fig. 1: shows an unmanned aerial vehicle (UAV) according to the invention, in a schematic perspective view;
- Fig. 2: shows the UAV from Fig. 1 in a schematic exploded view;
- Fig. 3: shows two airframe parts according to the invention, wherein an EPS liner of each airframe part is covered with a PC shell on one side and attached to the other liner on the other side, in a schematic exploded view of;
- Fig. 4: shows a detail of a liner of an airframe part according to the invention with an insert received within the liner, in a schematic perspective view;
- Fig. 5: shows an airframe part according to the invention, wherein opposing sides of an EPS liner are covered by two PC shell parts of a shell, in a schematic exploded view;
- Fig. 6: shows a flat PC sheet arranged at a negative mold for thermoforming a shell part for an airframe part according to the invention, in a schematic sectional view;
- Fig. 7: shows the PC sheet while being heated and sucked into the negative mold, in a schematic sectional view;
- Fig. 8: shows the PC sheet in the final shape of the shell part in the negative mold, in a schematic sectional view;
- Fig. 9: shows contour milling of the shell part on a holding device, in a schematic sectional view;
- Fig. 10: shows injection of polystyrene beads into a mold, in a schematic sectional view;
- Fig. 11: shows molding of a liner by heating the polystyrene beads inside the mold from Fig. 10, in a schematic sectional view;
- Fig. 12: shows the liner from Fig. 11 and the shell part from Fig. 9 arranged inside the mold during bonding to form an airframe part according to the invention, in a schematic sectional view;
- Fig. 13: shows the airframe part from Fig. 12, in a schematic sectional view;
- Fig. 14: shows a principal sketch of an airframe part according to the invention, with a color layer and a primer layer being arranged between a PC shell and an EPS liner, in a schematic sectional view;
- Fig. 15: shows a PC shell and an EPS liner arranged at a mold, prior to bonding to form an airframe part according to the invention, in a schematic sectional view;
- Fig. 16: shows a schematic flow chart of a manufacturing method according to the invention.

### Detailed description of the drawings

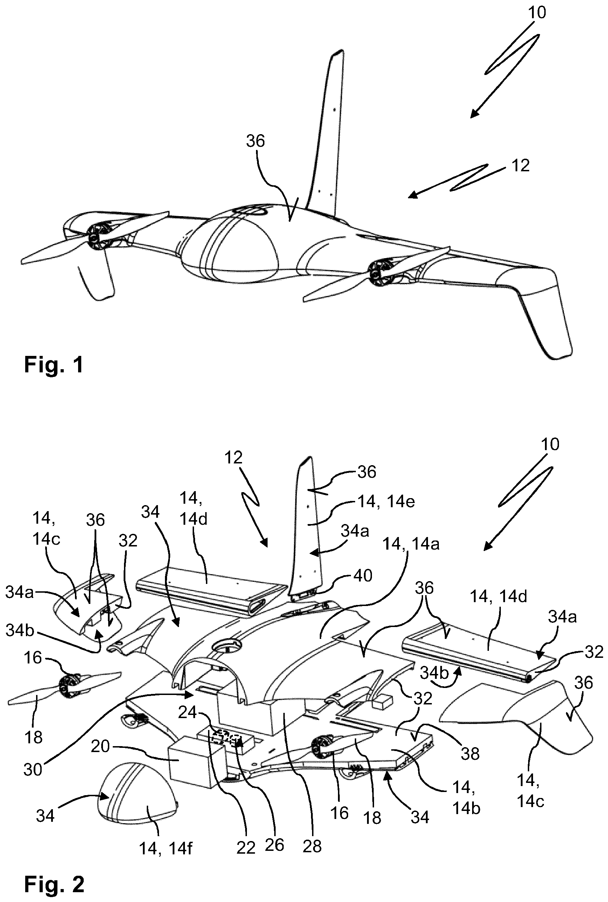

**Figure 1** shows an unmanned aerial vehicle (UAV) **10**. In **Figure 2**, an exploded view of the UAV 10 is depicted.

The UAV 10 comprises an airframe **12**. The airframe 12 comprises several airframe parts **14**, in this embodiment a center top part **14a**, a center bottom part **14b**, two wing tips **14c**, two control surfaces **14d**, a stabilizer **14e** and a cover or nose **14f.** The UAV 10 further comprises two motors **16**, each driving a propeller **18**. A battery **20** powers the motors 16. The motors 16, the propellers 18 and the battery 20 are parts of a propulsion system. A control system **22** includes a controller **24**, preferably including autopilot functionality, and at least one attitude control sensor **26.** The control system 22 may be powered by battery 20.

The UAV 10 is designed to carry a payload, such as a measurement sensor system **28.** In this embodiment, the measurement sensor system 28 comprises a camera and a memory device (not depicted in detail). The measurement sensor system 28 serves to gather measurement data during flight operation of the UAV 10. The measurement data might e.g. be used for land surveying purposes or infrastructure inspection.

The battery 20, the aforementioned components of the control system 22 and the measurement sensor system 28 are arranged inside a cavity **30**, which is formed between the center top part 14a and the center bottom part 14b. While the center top and bottom parts 14a, 14b are permanently fixed to one another, the nose 14f may be detachable from the fuselage formed by the center top and bottom parts 14a, 14b. By removing the nose 14f, access to the cavity 30 is provided. This allows for maintenance or replacement of the components inside cavity 30.

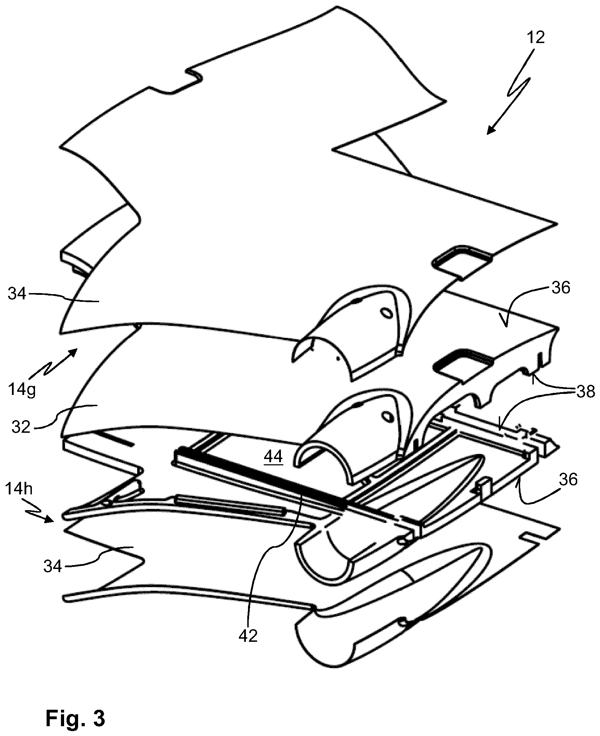

**Figure 3** shows an exploded view of two airframe parts 14, namely an upper wing part **14g** and a lower wing part **14h**, being part of an airframe 12 similar to the one shown in Figures 1 and 2.

All of the aforementioned airframe parts 14 each comprise a liner **32** made from expanded polystyrene (EPS) and a shell **34** made from polycarbonate. In case of the center top part 14a, the center bottom part 14b, the nose 14f, the upper wing part 14g and the lower wing part 14h, the shell 34 consists of one monolithic shell part. In case of the wing tips 14c, the control surfaces 14d and the stabilizer 14e, the shell 34 consists of two separate shell parts **34a**, **34b**, which are arranged on opposing sides of the respective liner 14.

Irrespective of the number of shell parts, the shell 34 of one of the airframe parts 14 covers an exposed surface **36** of the respective liner 32. In particular, the shell 34 covers at least 90 % of the exposed surface 36 of each airframe part 14, preferably at least 95 %, in particular at least 98 %, of the exposed surface 36 of at least one of the airframe parts 14. The exposed surface 36 is the outer surface of the airframe 12 in the assembled state, cf. Figure 1. In other words, the shells 34 define most of the exposed surface 36 of the airframe 12, preferably the entire exposed surface 36. Only a small fraction of the exposed surface 36 of the airframe 12 is defined by the liners 32. Preferably, the outer side (exposed surface 36) of at least one of the liners 32 is completely covered by the respective shell 34.

Adjacent airframe parts 14 may be fixed to one another at internal surfaces **38** of their respective liners 32. In Figure 3, the liners of the upper and lower wing parts 14g, 14h are to be glued to one another. In case of the airframe 12 of Figures 1 and 2, the liners 32 of center top part 14a and center bottom part 14b are glued to one another. Similarly, the liners 32 of the wing tips 14c are fixed to the liners 32 of the center top and bottom parts 14a, 14b. The stabilizer 14e is fixed to center top part 14a. Reinforcements **40**, e.g. from carbon fiber reinforced composite, may be received in grooves of the liners 32. The reinforcement 40 may be molded into one of the liners 32, for instance the liner 32 of the stabilizer 14e, and fixed, e.g. glued, to the other liner 14.

The internal surface 38 of the liners 32 may be structured. For instance, ribs and/or spars may be provided in order to reduce weight while maintaining high strength. Further interfaces for components of the UAV may be formed at the internal surface 38. In Figure 3, cable guides **42** are visible. The cable guides 42 allow routing of cables for instance between motors 16 and a battery 20 or a control system 22, cf. Figure 2. During assembly, a cable is arranged at the cable guide 42, e.g. inside a channel structure of the cable guide 42. Clips or the like may be integrated in the cable guided 42 to secure the cable in particular during assembly. In the assembled state, the liner 32 of an adjacent airframe part 14 may prevent the cable from disengaging from the cable guide. Likewise, a receptacle **44** for an electric component, such as a printed circuit board, may be integrated in a liner 32. Note that such cable guides 42 or receptacles 44 may also be present in the airframe 12 of Figures 1 and 2, in particular in the center top and/or bottom parts 14a, 14b, while not being explicitly depicted in Figure 2.

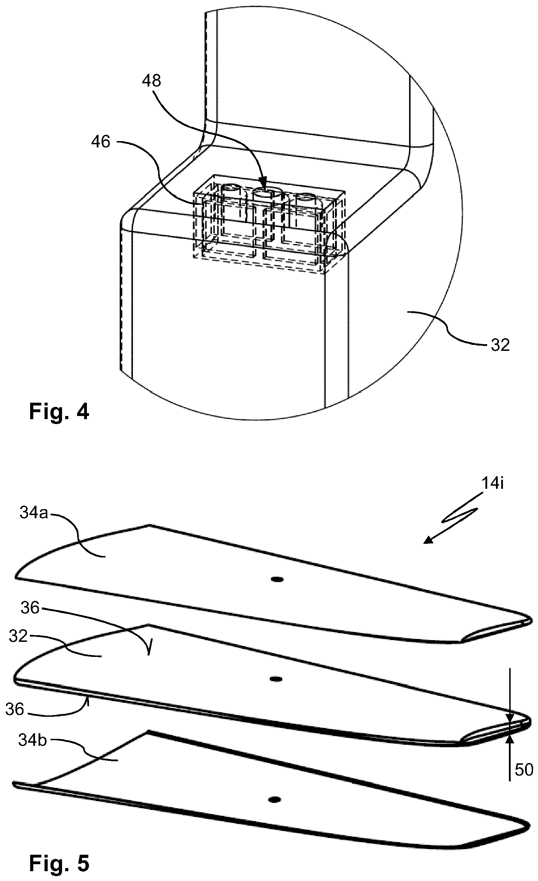

An insert **46** may be embedded inside a liner 32, see **Figure 4**. Such inserts 46 allow for fixation of components, such as motors 16, battery 20, control system 22 or measurement sensor system 28, cf. Figure 2. Likewise, inserts 46 may serve to attach actuators, which may e.g. adjust the control surfaces 14d. The insert may for instance comprise a screw hole **48**.

**Figure 5** shows an airframe part 14, namely a wing part **14i**. The wing part 14i comprises a liner 32.

In this case, the liner 32 of wing part 14i is thin. A thickness **50** of the liner 32 at its thinnest part (minimum thickness) may be less than 5 mm. In this embodiment, the liner 32 is a solid body.

The wing part 14i further comprises a shell 34 having two polycarbonate shell parts **34a, 34b.** The liner 32 is covered by the shell 34 formed by the two shell parts 34a, 34b. The shell parts 34a, 34b are bonded to opposing sides of the liner 32. In this way, the entire external surface 36 is covered by the shell 34. An internal surface 38 provides an attachment interface for fixing the wing part 14i to another airframe part.

A similar design with one liner 32 being covered by two opposing shell parts 34a, 34b is applicable to the wing tops 14c, the control surfaces 14d and the stabilizer 14e of the airframe depicted in Figures 1 and 2. Note that two-sided coverage by separate shell parts is also applicable to thicker liners, which might comprise an internal cavity (not depicted in detail).

Since the shell 34 covers the exposed surface 36 of one of the airframe parts 14 described above (at least almost) completely, the shell 34 has a certain areal extension. Obviously, the extension of the shell 34 depends on the size of the respective airframe part 14. For an UAV having a wingspan between 1 m and 2 m, the extension of the shell 34 is typically at least 200 cm², e.g. for smaller airframe parts such as wing tips 14i or winglets. For larger airframe parts 14, such as fuselage parts, center parts 14a, 14b or wing parts 14g, 14h, the extension of the shell may be at least 600 cm². Note that the curvature of the shell 34 is taken into account when measuring the expansion. Thus, in a plane projection the area of the shell 34 is somewhat less, depending on the amount of curvature.

With airframe parts 14, which are covered on one side by the shell 34 and which have a structured internal surface 38, the shell may cover at least 30 %, preferably at least 40 %, of the overall surface of the liner 32. The overall surface is composed of the exposed surface 36 and the internal surface 38. In these embodiments, due to the spatial structure of the internal surface 38, the internal surface 38 is generally larger than the exposed surface 36. With airframe parts 14, which are covered on two sides by separate shell parts 34a, 34b, the shell 34 may cover at least 60 %, preferably at least 70 %, of the overall surface of the liner 32.

The liners 32 of different airframe parts may have different density. For instance, the liners 32 of the wing tips 14c and of the stabilizer 14e may have a density of 110 g/l (= 110 kg/m³). The liners 32 of the center top part 14a and the center bottom part 14b may have a density of 50 g/l (= 50 kg/m³). The liner of the nose 14f may have a density of 70 g/l (= 70 kg/m³). Similarly, the liners 32 of the upper wing part 14g and the lower wing part 14h may have a density of 55 g/l (= 50 kg/m³). The liner 32 of the wing part 14i may have a density of 90 g/l (= 50 kg/m³).

With all airframe parts 14 described above, a full surface bond is established between the shell 34 and the liner 32. In other words, the shell 34 or the shell parts 34a, 34b are bonded to the liner 32 essentially over the entire extension of the shell 34 or shell part 34a, 34b. It will be appreciated, that for instance due to manufacturing tolerances or local depressions in the liner (which may result e.g. from the molding procedure or from handling) the actual bond area may be slightly smaller than the extension of the shell 34 or shell part 34a, 34b. Generally, the actually bonded area is at least 90 % of the extension of the shell 34 or shell part 34a, 34b - this is considered a full surface bond or bond over the entire extension of the shell. A bond over at least 95 %, in particular at least 98 %, of the extension of the shell 34 or shell part 34a, 34b is generally desired. Especially along an edge of the shell 34 or a shell part 34a, 34b a circumferentially closed bond shall be established.

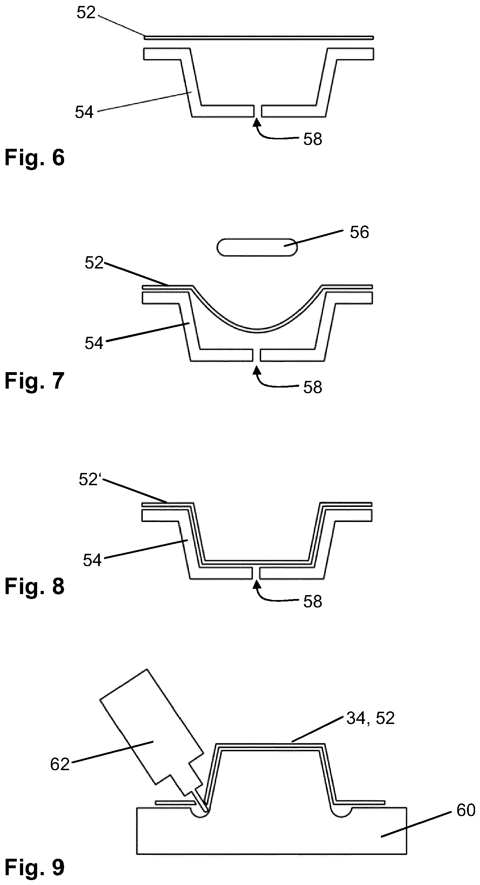

A Method for manufacturing an airframe part 14 having an extended PC shell 34 bonded to an EPS liner 32, wherein a full surface bond is established, will be explained below with reference to **Figures 6** to **12** and **16**. The steps for manufacturing the shell 34 are described first, while it will be appreciated that the shell 34 and the liner 32 are manufactured independent from one another. However, the three-dimensional geometry of the shell 34 is adapted to the shape of the external surface 36 of the liner 32. Obviously, bonding the shell 34 and the liner 32 is done after shell 34 and liner 32 have been manufactured.

Note that the principles of the method apply to any of the described above airframe parts 14. The method is explained with an airframe part 14 having a shell consisting of one monolithic shell part. For airframe parts 14 comprising multiple shell parts 34a, 34b, the person skilled in the art will understand, that the multitude of shell parts 34a, 34b is manufactured and arranged at the desired positions of the liner 32, in particular on opposing sides of the liner 32.

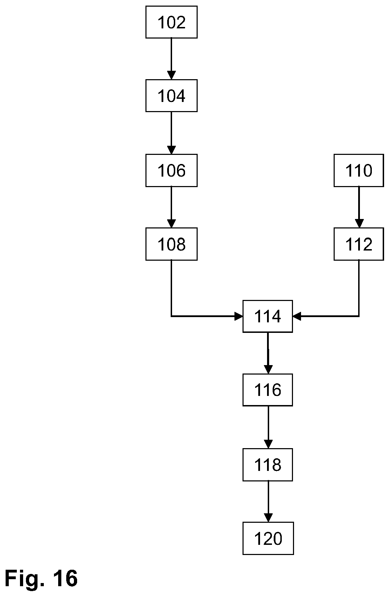

The shell 34 is made from a flat sheet **52** of polycarbonate (PC). An outer surface of the PC sheet 52 may be provided with a protective film, which generally is removed only after assembly of the airframe 12 or UAV 10. In a step **102** (cf. Figure 16), a color layer may be printed on the flat PC sheet 52. The color layer is preferably printed on the side of the sheet 52, which will face the liner 32.

In a step **104**, a primer layer, in particular a layer of thermally activated adhesive, may be printed on the flat PC sheet 52. The primer layer is printed on the side of the sheet 52, which will face the liner 32. In particular, the primer layer may be printed on the color layer.

The flat sheet 52 is adapted to the shape of the liner 32 in a thermoforming step **106.** Preferably, thermoforming is performed after printing of the color layer and the primer layer. However, it would in principle be possible to apply the color and/or primer layer after thermoforming.

For thermoforming of the sheet 52, a thermoforming mold **54**, in the depicted embodiment a negative mold is employed. However, use of a positive mold is also possible. First, the flat sheet 52 is arranged at the mold 54, see **Figure 6**.

Then the sheet 52 is heated, for instance using a heater **56**, see **Figure 7**. Due to heating, the sheet 52 becomes soft and pliable. Vacuum is applied to mold 54 at a suction port **58**, in order to suck the sheet 52 into the mold 54, see **Figure 8**. A central region of the sheet 52, now has the shape of the shell 34, which conforms to the shape of the liner 32.

The formed sheet 52 is cooled, so that it solidifies in the mold 54. Water or air cooling may be applied to accelerate solidification.

After solidification, the formed sheet 52 is preferably transferred to a holding device **60**. In a step **108**, edges of the sheet 52 are trimmed by a milling device **62,** so the shell 34 is obtained.

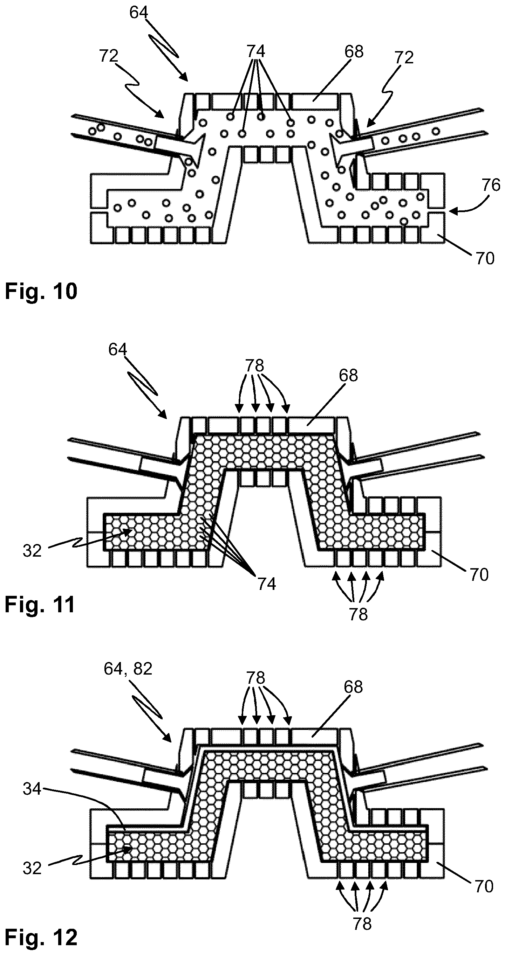

For manufacturing of the liner 32 a first mold **64** is employed, see **Figure 10**. The first mold comprises two mold parts **66**, **68**, which define a mold cavity **70**. The mold parts 66, 68 may be opened or closed. In the closed state, the mold cavity 70 is enclosed by the mold parts 66, 68.

At least one of the mold parts 66, 68 has at least one bead injector **72**. In a step **110,** polystyrene beads **74** are injected into the mold cavity 70 through the bead injectors 72. The polystyrene beads 74 may have been pre-expanded prior to injection into the first mold 64.

During injection of the beads 74, the first mold 64 may be partially open. In other words, a gap **76** may be formed between the mold parts 66, 68 around the mold cavity 70. The gap 76 may be smaller than the polystyrene beads 74. Alternatively or additionally, retaining means such as a curtain or shield may be provided at the gap 76 (not depicted). The increased width of the mold cavity 70 contributes to achieve uniform and sufficient filling of the mold 64, especially near edges or in regions where the liner 32 is very thin.

If the beads 74 have been injected in the partially open state of the mold 64, the mold is completely closed after injection of a predetermined amount of polystyrene beads 74.

If an insert 46 shall be embedded in the liner 32, the insert 46 is positioned inside the mold cavity 70, prior to injection of the polystyrene beads 74. Pins or the like may be provided at one or both of the mold parts 66, 68 to hold the insert 46 in place.

In a step **112**, the liner 32 is molded from the polystyrene beads 74, see **Figure 11****.** In order to form the liner 32, the beads 74 are heated. Thereto, steam is directed through the bulk of beads 74 inside the mold cavity 70. The mold parts 68, 70 have steam nozzles **78** (only some of which are labelled in Figure 11), through which hot steam may enter and exit the mold cavity 70. Upon heating, the beads 74 expand (further), so they contact one another and fuse together.

After cooling and solidification of the liner 32, the mold 64 is opened. The liner may be removed from the mold 64 and inspected for quality.

For bonding the shell 34 to the liner 32, both the shell 34 and the liner 32 are placed in a mold cavity **80** of a second mold **82** in a step **114**, see also **Figure 12**. If several shell parts 34a, 34b shall be bonded to one liner 32, typically the liner 32 and all shell parts 34a, 34b are collectively arranged inside the mold cavity 80 (not depicted); i.e. bonding of all shell parts 34a, 34b to the liner 32 will be established in one step.

The geometry of the mold cavity of the second mold may be different from the first mold 64. However, in the depicted embodiment, the second mold cavity 80 has the same dimensions as the first mold cavity 70. In particular, one same mold may be used as the frist and as the second mold 64/82. In this instance, the terms "frist" and "second" refer to the order of manufacturing with this very mold 64/82. When the second mold 82 is closed, the shell 34 and the liner 32 are pressed against another, since the shell 34 is additionally present in the mold cavity 80 (which is as wide as the first mold cavity 70, which is completely filled by the liner 32).

In a step **116**, the shell 34 is bonded to the liner 32. To this end, hot steam is directed to the shell 34 and the liner 32 through the steam nozzles 78. Note that the presence of the shell adjacent to the mold part 68 may block passage of the steam through the shell-liner-arrangement. However, the steam encountering the shell 34 and the liner 32 heats the shell-liner-arrangement sufficiently to cause the polystyrene to expand even further and to bond to the shell 34. The primer layer, if present, may reduce the temperature required to create a sufficiently strong and even bond. The compression of the shell-liner-arrangement caused by closing of the mold 82 and by expansion of the polystyrene contributes significantly to the formation of a bond that extends over the entire shell.

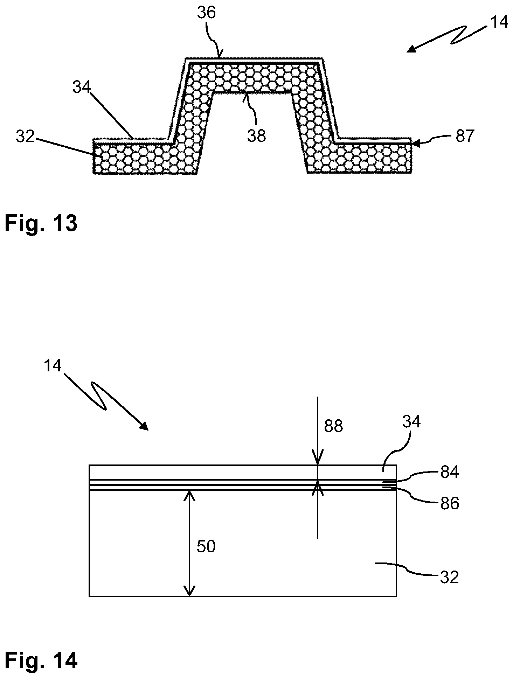

After cooling and solidification the second mold 82 is opened and the airframe part 14 removed, cf. step **118**. The airframe part 14 is shown in **Figure 13**. Note that the shell 34 covers the entire exposed surface 36 without the formation of any gaps between shell 34 and liner 32.

A magnified section of an airframe part 14, such as the one from Figure 13, is shown in **Figure 14**. It is apparent that a color layer **84** and a primer layer **86** are disposed between the shell 34 and the liner 32. The color layer 84 and the primer layer 86 establish the full surface bond between shell 34 and liner 32. Note that the color layer 84 and the primer layer 86 may at least partially mix. In particular, a common color-primer-layer **87** may be formed during molding of shell 34 and liner 32, cf. Figure 13.

Since the PC sheet 52 was deformed during thermoforming (step 106) the shell 34 generally has a varying thickness **88**. A minimum thickness of the shell 34 (thickness 88 at the thinnest part of the shell 34) may be between 0.1 mm and 0.4 mm, in particular at most 0.375 mm.

While the thickness 50 of the liner 32 depicted in Figure 14 is uniform, the liner 32 generally has varying thickness 50. At the thinnest part of the liner 32, its minimum thickness 50 may be less than 6 mm.

As outlined above, the airframe part 14 is assembled to form an airframe 12, cf. step **120** in Figure 16. The airframe 12 preferably comprises further airframe parts 14 having a liner 32 covered by a full surface bonded outer shell 34. In particular, the liners 32 of adjacent airframe parts 14 may be fixed to one another. During and/or after assembly of the airframe 12 further components of the UAV 10 may be installed, so that finally the UAV 10 is obtained.

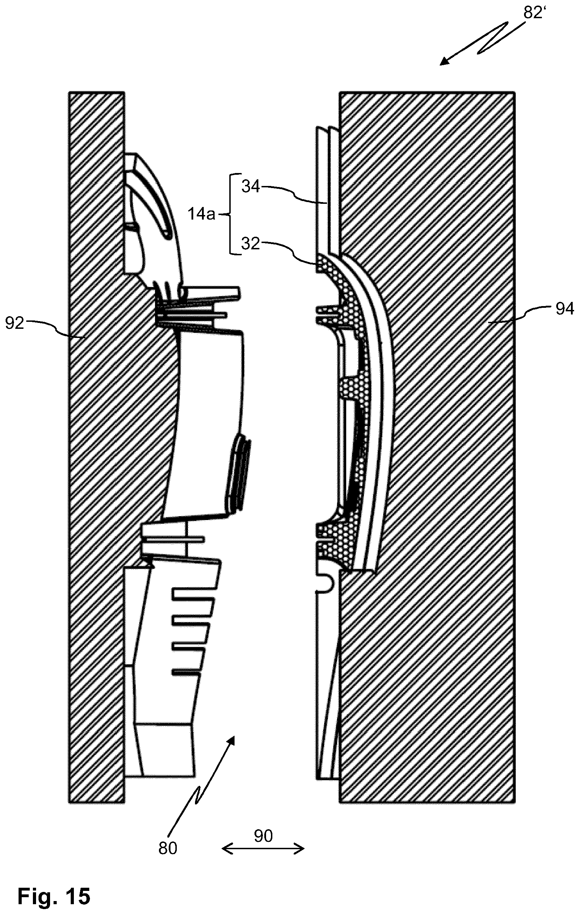

**Figure 15** shows the center top part 14a of the airframe 12 from Figures 1 and 2 arranged in at a second mold **82'**, prior to bonding of its shell 34 and liner 32. In this embodiment, the mold cavity 80 of the second mold 82' is different from the mold cavity of a first mold (not depicted), which was used to mold the liner 32. In particular, the mold cavity 80 of the second mold 82' is narrower in opening and closing direction **90** of mold parts **92**, **94**. Dimensions of the second mold cavity 80 perpendicular to the opening and closing direction 90 are the same as with the first mold cavity. The different geometry may particularly be realized at the mold part 94 adjacent to the shell 34, while the mold part 92 adjacent to the liner 32 may correspond to the respective mold part of the first mold, in order to evenly support the complex-shaped internal surface 38 of the liner 32.

In summary, the invention relates to an airframe part for an airframe for an unmanned aerial vehicle (UAV), in particular a tail-sitting fixed-wing vertical takeoff and landing UAV. The airframe part has an expanded polystyrene (EPS) liner and a polycarbonate (PC) shell. The shell is arranged on the outer side of the airframe part. The outer face of the liner is mainly, in particular completely covered by the shell. Adhesive bonding is established between the shell and the liner over essentially their entire contact area. The same mold can be used for forming the liner and for bonding the liner and the shell.

### List of reference signs

Unmanned aerial vehicle (UAV) **10**
Airframe **12**
Airframe parts **14**
Center top part **14a**
Center bottom part **14b**
Wing tips **14c**
Control surfaces **14d**
Stabilizer **14e**
Nose **14f**
Upper wing part **14g**
Lower wing part **14h**
Wing part **14i**
Motor **16**
Propeller **18**
Battery **20**
Control system **22**
Controller **24**
Attitude control sensor **26**
Measurement sensor system **28**
Cavity **30**
Liner **32**
Shell **34**
Shell parts **34a**, **34b**
Exposed surface **36**
Internal surface **38**
Reinforcement **40**
Cable guide **42**
Receptacle **44**
Insert **46**
Screw hole **48**
Thickness **50** of liner 32
Sheet **52**
Thermoforming mold **54**
Heater 56
Suction port **58**
Holding device **60**
Milling device **62**
First mold **64**
Molds part **66**, **68** of first mold 64
Mold cavity **70** of first mold 64
Bead injector **72**
Beads **74**
Gap **76**
Steam nozzles **78**
Mold cavity **80** of second mold 82
Second mold **82**; **82'**
Color layer **84**
Primer layer **86**
Color-primer-layer **87**
Thickness **88** of shell 34
Opening and closing direction **90**
Mold parts **92**, **94** of second mold 82
Print color layer **102**
Print primer layer **104**
Thermoforming **106**
Contour milling **108**
Inject beads **110**
Mold liner **112**
Arrange shell and liner in mold **114**
Bond liner and shell **116**
Remove airframe part from mold **118**
Assemble airframe **120**

## Claims

1. Airframe part (14) for an airframe (12) for an unmanned aerial vehicle (10), the airframe part (14) comprising
- a liner (32) made from expanded polystyrene (EPS), and
- a shell made from polycarbonate (PC),
wherein the shell (34) covers at least 70 % of an exposed surface (36) of the airframe part (14), and
wherein the shell (34) is bonded to the liner (32) over at least 90 % of the extension of the shell (34).

2. Airframe part (14) according to claim 1, wherein the shell (34) covers at least 98 % of the exposed surface (36) of the liner (32).

3. Airframe part (14) according to claim 1 or 2, wherein the shell (34) comprises at least two, preferably exactly two, separate shell parts (34a, 34b), each shell part (34a, 34b) being made from polycarbonate.

4. Airframe part (14) according to one of the preceding claims, wherein the shell (34) has a maximum thickness (88) of at most 0.5 mm, preferably at most 0.4 mm.

5. Airframe part (14) according to one of the preceding claims, wherein the liner (32) has a density of at most 120 g/l, preferably at most 75 g/l, particularly preferably at most 60 g/l.

6. Airframe part (14) according to one of the preceding claims, wherein an extension of the shell (34) is at least 150 cm², preferably at least 400 cm², particularly preferably at least 0.1 m².

7. Airframe part (14) according to one of the preceding claims, wherein an insert (46) is received inside the liner (32), preferably inmolded into the liner (32).

8. Airframe part (14) according to one of the preceding claims, wherein a cable guide (42) and/or a receptacle (44) for an electric component is formed within the liner (32).

9. Airframe part (14) according to one of the preceding claims, wherein a primer layer (86) is disposed between the shell (34) and the liner (32).

10. Airframe part (14) according to one of the preceding claims, wherein a color layer (84) is disposed between the shell (34) and the liner (32), in particular between the shell (34) and a primer layer (86).

11. Airframe (12) for an unmanned aerial vehicle (10), the airframe (12) comprising at least one airframe part (14) according to one of the preceding claims, preferably several airframe parts (14) according to one of the preceding claims.

12. Airframe (12) according to claim 11, wherein the liner (32) of a first airframe part (14) according to one of claims 1 to 10 is fixed, preferably glued, to the liner (32) of a second airframe part (14) according to one of claims 1 to 10.

13. Airframe (12) according to claim 12, wherein the liners (32) of the two airframe parts (14) enclose a cavity (30).

14. Unmanned aerial vehicle (10), in particular fixed wing unmanned aerial vehicle (10), comprising an airframe (12) according to one of claims 11 to 13, a propulsion system and a control system (22) , the control system (22) preferably comprising an attitude control sensor (26) and a controller (24), the unmanned aerial vehicle (10) preferably further comprising a measurement sensor system (28), in particular comprising a camera, for receiving non-flight related data.

15. Method for manufacturing an airframe part (14) comprising a liner (32) made from expanded polystyrene (EPS) and a shell (34) having at least one shell part (34a, 34b) made from polycarbonate (PC), wherein the shell (34) covers at least 70 % of an exposed surface (36) of the airframe part (14), the method comprising:
A) Thermoforming the at least one shell part (34a, 34b) of the shell (34) from a polycarbonate sheet (52);
B) Molding the liner (32) by heating, preferably by steam heating, polystyrene beads (74) inside a mold cavity (70) of a first mold (64);
C) Arranging the at least one shell part (34a, 34b) of the shell (34) and the liner (32) inside a mold cavity (80) of a second mold (82; 82');
D) Bonding the at least one shell part (34a, 34b) of the shell (34) to the liner (32) over at least 90 % of the extension of the at least one shell part (34a, 34b) by heating, preferably by steam heating, the at least one shell part (34a, 34b) and the liner (32).

16. Method according to claim 15, wherein the geometry of the mold cavity (70) of the first mold (64) is identical to the geometry of the mold cavity (80) of the second mold (82).

17. Method according to claim 15 or 16, wherein the first mold (64) is identical in construction to the second mold (82), in particular wherein one same mold is used as the first mold and as the second mold (64, 82).

18. Method according to claim 15, wherein the geometry of the mold cavity of the first mold is different from the geometry of the mold cavity (80) of the second mold (82').

19. Method according to one of claims 15 to 18, wherein a color layer (84) and/or a primer layer (86) are printed onto the polycarbonate sheet (52) prior to step A), in particular on the side of the polycarbonate sheet (52) facing the liner (32) in steps C) and D).

20. Method according to one of claims 15 to 19, wherein, prior to step B), the polystyrene beads (74) are injected into the mold cavity (70) of the first mold (64) while the first mold (64) is partially open.
